# EUROPÄISCHE PATENTSCHRIFT

(11) **EP 1 320 511 B1**
(45) Veröffentlichungstag und Bekanntmachung des Hinweises auf die Patenterteilung: **19.10.2005**
(21) Anmeldenummer: 01955385.8
(22) Anmeldetag: 03.08.2001
(51) Int. Cl.: C01B 15/10

(54) **NATRIUMPERCARBONAT-WIRBELSCHICHTGRANULAT UND VERFAHREN ZU SEINER HERSTELLUNG**
SODIUM PERCARBONATE FLUID BED GRANULATED MATERIAL AND METHOD FOR THE PRODUCTION THEREOF
GRANULAT CONSTITUE DE PERCARBONATE DE SODIUM EN LIT FLUIDISE ET PROCEDE DE FABRICATION

(30) Priorität: 29.09.2000 DE 10048514
(43) Veröffentlichungstag der Anmeldung: 25.06.2003
(73) Patentinhaber: Degussa AG, 40474 Düsseldorf (DE)
(72) Erfinder: JAKOB, Harald, 63594 Hasselroth (DE); BERTSCH-FRANK, Birgit, 42329 Wuppertal (DE)
(86) Internationale Anmeldenummer: PCT/EP2001/008991
(87) Internationale Veröffentlichungsnummer: WO 2002/026623

(56) Entgegenhaltungen:
- EP-A- 0 796 817
- DE-A- 2 733 935
- DE-A- 3 142 574
- DE-A- 4 329 205
- FR-A- 2 247 533
- DATABASE WPI Section Ch, Week 198216 Derwent Publications Ltd., London, GB; Class E31, AN 1982-31578E XP002180576 & JP 57 042512 A (MITSUBISHI GAS), 10. März 1982 (1982-03-10)

## Beschreibung

Die Erfindung betrifft granulatförmiges Natriumpercarbonat mit niedrigem TAM-Wert (mikrokalorimetrische Bestimmung der Energiefreisetzung bei der Lagerung, bestimmt mittels TAM® Thermal Activity Monitor der Firma Thermometric AB, Järfälla (SE)), insbesondere einem TAM-Wert von unter 8 µW/g, wobei das Natriumpercarbonat-Granulatkorn einen Aufbau aufweist, wie er durch eine Wirbelschicht-Sprühgranulation erhältlich ist, und im Korn ein oder mehrere Stabilisatoren im wesentlichen gleichmäßig verteilt sind. Die Erfindung betrifft ferner ein Verfahren zur Herstellung des erfindungsgemäßen granulatförmigen Natriumpercarbonats, wobei eine wässrige Wasserstoffperoxidlösung und wässrige Sodalösung oder Sodasuspension zusammen mit einem oder mehreren Stabilisatoren in eine aus Natriumpercarbonatpartikeln gebildete Wirbelschicht eingesprüht werden und gleichzeitig Wasser aus der Wirbelschicht verdampft wird.

Zur Herstellung von Natriumpercarbonat der allgemeinen Formel 2 Na₂CO₃ · 3 H₂O₂, welches als Bleichkomponente in Wasch- und Reinigungsmitteln Anwendung findet, finden insbesondere Kristallisationsverfahren und sogenannte Wirbelschicht-Sprühgranulationsverfahren in technischem Maßstab Anwendung. Bei den Kristallisationsverfahren, beispielhaft wird auf das US-Patent 4,146,571 verwiesen, werden Wasserstoffperoxid und Soda in einer Kochsalz enthaltenden Mutterlauge umgesetzt. Um die Kristallisation zu steuern und die Stabilität des Natriumpercarbonats zu verbessern, werden mit der Wasserstoffperoxidlösung gleichzeitig Magnesiumionen in einer Menge von 0,2 bis 2 Gew.-% eingetragen. Zusätzlich werden dem System 0,5 bis 3 Gew.-% Natriumhexametaphosphat zugeführt. Das so erhaltene Natriumpercarbonat läßt sich per se zwar gut lagern und weist einen niedrigen TAM-Wert auf, die Aktivsauerstoffstabilität des Kristallisats in Gegenwart von Waschmittelbestandteilen, wie insbesondere Zeolithen, ist aufgrund der sprießigen Oberfläche und des wenig dichten Aufbaus unbefriedigend. Die Lagerstabilität von durch ein Kristallisationsverfahren erzeugtem Natriumpercarbonat in Gegenwart von Waschmittelbestandteilen läßt sich zwar durch Umhüllen des Natriumpercarbonatkorns mit stabilisierend wirkenden Komponenten, wie Natriumsulfat und anderen hydratbildenden Stoffen, zwar verbessern, jedoch werden die heute an ein solches Produkt gestellten Anforderungen oft nicht mehr ausreichend erfüllt.

Gemäß dem in der DE-PS 26 44 147 beschriebenen Kristallisationsverfahren zur Herstellung von Natriumpercarbonat wird außer einem Magnesiumsalz und Natriumhexametaphosphat zusätzlich Wasserglas mitverwendet: Die Verunreinigungen der Mutterlauge aus der Kristallisation werden bei der Ausfällung von Magnesiumsilikat an diesem adsorbiert und durch Filtration von der Mutterlauge vor deren Wiederverwendung abgetrennt. Die zuvor genannten Nachteile bleiben aber weiterhin bestehen.

Bei den Wirbelschicht-Sprühgranulationsverfahren werden im wesentlichen kugelförmige dichte Natriumpercarbonatpartikel mit herstellungsbedingt schalenförmigem Aufbau und höherer Lagerstabilität als ein durch Kristallisation gewonnenes Produkt erhalten. Zur Durchführung des Verfahrens werden eine wässrige Wasserstoffperoxidlösung und eine wässrige Sodalösung oder gegebenenfalls auch Sodasuspension in eine Wirbelschicht gesprüht, welche Natriumpercarbonatpartikel enthält, deren Durchmesser kleiner ist als derjenige der herzustellenden Partikel. Während des Einsprühens der in wässrigem Medium befindlichen Reaktionspartner wird Wasser bei einer Wirbelschichttemperatur im Bereich von 40 bis 95 °C verdampft.

Im Wirbelschicht-Sprühgranulationsverfahren gemäß DE-OS 27 33 935 werden die Wasserstoffperoxidlösung und Sodalösung unmittelbar vor dem Versprühen gemischt. Um eine vorzeitige Kristallisation innerhalb der Düse zu vermeiden, muß ein kondensiertes Alkalimetall- oder Ammonium-Phosphat zugesetzt werden. Zusätzlich können der Wasserstoffperoxidlösung Stabilisatoren, wie Magnesiumsulfat, und/oder der Natriumcarbonatlösung Natriumsilikat zugesetzt werden. Die Zugabe der zuvor genannten Stabilisatoren wird jedoch als nicht notwendig erachtet. Die im Ausführungsbeispiel genannte Menge Magnesiumsulfat führt zu einem Magnesiumgehalt im Natriumpercarbonat von über 1 g pro kg.

In dem Wirbelschicht-Sprühgranulationsverfahren zur Herstellung von granulatförmigem Natriumpercarbonat gemäß DE-PS 43 29 205 wird das Erfordernis des Einsatzes eines kondensierten Phosphats dadurch vermieden, dass eine speziell ausgeformte Dreistoffdüse mit externer Mischung der die Reaktionspartner enthaltenden Lösungen verwendet wird. Auch gemäß diesem Verfahren können den zu versprühenden Lösungen stabilitätserhöhende Additive, wie Magnesiumsalze, Wasserglas, Komplexbildner, Stannate und Dipicolinsäure zugesetzt werden. Diesem Dokument läßt sich keine Anregung über die Einsatzmenge der Additive, über die stoffliche Auswahl der Komplexbildner sowie über mögliche Kombinationen unterschiedlicher Stabilisatoren entnehmen.

Aus Gründen der Handhabungssicherheit, insbesondere einer erhöhten Sicherheit bei der Lagerung von Natriumpercarbonat in einem Silo, wird heute zunehmend Natriumpercarbonat mit einer weiter verbesserten Lagerfähigkeit, entsprechend einem gegenüber bisher weiter reduzierten TAM-Wert, verlangt. Der TAM-Wert von Natriumpercarbonat läßt sich zwar in gewissem Umfang durch eine Umhüllung des Natriumpercarbonats mit einem inertisierenden Material verbessern, also erniedrigen, der damit erzielbare Effekt ist in vielen Fällen jedoch noch nicht ausreichend. Im Verfahren gemäß DE-OS 27 33 935 wird unter Einsatz der beispielhaft genannten Menge eines kondensierten Phosphats und Magnesiumsulfats zwar ein niedriger TAM-Wert erhalten, jedoch ist die Einsatzmenge an Stabilisatoren sehr hoch.

Aufgabe der vorliegenden Erfindung ist es demgemäß, ein weiteres verfahren zur Herstellung von granulatförmigem Natriumpercarbonat durch Wirbelschicht-Sprühgranulation aufzuzeigen, womit granulatförmiges Natriumpercarbonat mit möglichst niedrigem TAM-Wert unter Einsatz möglichst geringer Mengen eines oder mehrerer Stabilisatoren erhältlich ist. Gemäß einer weiteren Aufgabe sollte bei möglichst guter Stabilisierung, also niedrigem TAM-Wert, gleichzeitig die Lösegeschwindigkeit des Natriumpercarbonats nicht vermindert, sondern eher erhöht werden.

Diese und weitere Aufgaben, wie sie sich aus der weiteren Beschreibung herleiten, werden durch das erfindungsgemäße. Verfahren gelöst.

Gefunden wurde demgemäß ein Verfahren zur Herstellung von granulatförmigem Natriumpercarbonat durch Wirbelschicht-Sprühgranulation, wobei eine wässrige Natriumcarbonatlösung oder -suspension und eine wässrige Wasserstoffperoxidlösung in Anwesenheit mindestens eines stabilitätserhöhenden Additivs in eine Natriumpercarbonatpartikel enthaltende Wirbelschicht eingesprüht und gleichzeitig Wasser bei einer Wirbelschichttemperatur im Bereich von 40 bis 95 °C verdampft wird, das dadurch gekennzeichnet ist, dass man als Additiv eine Magnesiumverbindung in einer Menge von 50 bis 2.000 ppm Mg²⁺ und optional einen Chelatkomplexbildner aus der Reihe der Hydroxycarbonsäuren, Aminocarbonsäuren, Aminophosphonsäuren, Phosphonocarbonsäuren, Hydroxyphosphonsäuren sowie der Alkalimetall-, Ammonium- oder Magnesiumsalze, der genannten Säuren in einer Menge von 50 bis 2.000 ppm einsetzt, wobei sich die jeweilige Einsatzmenge auf das herzustellende Natriumpercarbonat bezieht und eine Kombination aus einem Magnesiumsalz und einem kondensierten Phosphat ausgenommen ist.

Zu Stabilisierungszwecken wird der zu versprühenden Sodalösung beziehungsweise Sodasuspension zusätzlich auch Wasserglas zugesetzt. Üblicherweise wird Wasserglas in einer Menge von etwa 1 Gew.-%. SiO₂, bezogen auf Natriumpercarbonat, verwendet. Ein Nachteil der Verwendung einer zu großen Menge an Wasserglas ist, dass die Lösegeschwindigkeit des Natriumpercarbonats abnimmt. Um diesen Nachteil zu minimieren, ist die Fachwelt daran interessiert, den SiO₂-Gehalt auf Werte deutlich unter 1 Gew.-%, bezogen auf Natriumpercarbonat, zu reduzieren. Durch Einsatz eines oder mehrerer der erfindungsgemäß zu verwendenden stabilisierend wirkenden Additive und zusätzlich Wasserglas ist es möglich, den SiO₂-Gehalt auf Werte um und unter 0,5 Gew.-% SiO₂, auch 0,1 Gew.-% SiO₂, zu senken.

Die Unteransprüche richten sich auf bevorzugte Ausführungsformen des erfindungsgemäßen Verfahrens.

Unter den als Stabilisator einzusetzenden Magnesiumverbindungen werden wasserlösliche Verbindungen bevorzugt, beispielsweise Magnesiumsulfat, Magnesiumchlorid und Magnesiumacetat. Besonders zweckmäßig ist es, Magnesiumsalze von Chelatkomplexbildnern aus der Reihe der Hydroxycarbonsäuren, Aminocarbonsäuren, Aminophosphonsäuren, Phosphonocarbonsäuren und Hydroxyphosphonsäuren zu verwenden. Derartige Salze wirken aufgrund ihres Magnesiumgehalts als auch Komplexbildnergehalts synergistisch. Gemäß einer bevorzugten Ausführungsform werden Magnesiumverbindungen in einer Menge entsprechend 100 bis 1000 ppm (ppm = parts per million) Mg²⁺ und besonders bevorzugt 100 bis 500 und insbesondere 200 bis 250 ppm Mg²⁺ eingesetzt. Zweckmäßigerweise wird die Magnesiumverbindung bei der Durchführung des Verfahrens der zu versprühenden Wasserstoffperoxidlösung zugesetzt.

Unter den erfindungsgemäß einzusetzenden Chelatkomplexbildnern werden Verbindungen aus der Reihe Nitrilotriessigsäure, Iminodiessigsäure, Ethylendiamintetraessigsäure, Iminodisuccinat, Weinsäure, Gluconsäure, Aminotri(methylen)phosphonsäure, Ethylendiamintetra(methylen)phosphonsäure, Diethylentriaminpenta(methylen)phosphonsäure, Tri-, Tetra-, Penta- und Hexamethylentetra(methylen)phosphonsäure und 1-Hydroxyethan-1,1-diphosphonsäure und deren wasserlösliche Salze, insbesondere Natrium, Ammonium- und Magnesiumsalze, eingesetzt. Die Einsatzmenge der Chelatkomplexbildner liegt bevorzugt im Bereich von 100 bis 1.000 ppm, insbesondere 200 bis 1.000 ppm. Gemäß einer weiteren bevorzugten Ausführungform werden die Chelatkomplexbildner oder deren Salze der zu versprühenden Sodalösung beziehungsweise Sodasuspension zugesetzt.

Die Maßnahmen zur Durchführung des Wirbelschicht-sprühgranulationsverfahren zur Herstellung von Natriumpercarbonat sind der Fachwelt bekannt - beispielhaft wird auf die DE-OS 27 33 935 und DE-OS 43 29 205 verwiesen.

Gemäß einer bevorzugten Ausführungsform des Verfahrens werden eine 30 bis 75 gew.-%ige Wasserstoffperoxidlösung und eine 20 bis 60 gew.-%ige, bevorzugt 30 bis 50 gew.-%ige Sodalösung beziehungsweise Sodasuspension in eine Wirbelschicht, welche Natriumpercarbonatpartikel enthält, eingesprüht. Mindestens eine dieser Lösungen oder die Suspension enthält mindestens ein erfindungsgemäß einzusetzendes stabilisierendes Additiv in wirksamer Konzentration; bevorzugt wird eine synergistisch wirksame Stabilisatorkombination eingesetzt. Besonders bevorzugt werden die beiden Lösungen oder Lösung und Suspension unter Verwendung einer Dreistoff- oder Vierstoff-Zerstäuberdüse mit externer Mischung der Lösungen, in die Wirbelschicht eingesprüht. Die genannten Düsen umfassen ein Zentralrohr und darum angeordnet zwei oder drei Mantelrohre, wobei das Zentralrohr über die Mantelrohre um 2 bis 10 Zentralrohrradien hinausreicht. Bei der Dreistoffdüse wird die H₂O₂-Lösung bevorzugt durch das Zentralrohr und die Sodalösung oder Sodasuspension durch ein benachbartes Mantelrohr geleitet; durch das äußere Mantelrohr wird ein Sprühgas zum Versprühen der Lösungen geführt. Bei der Ausführungsform unter Einsatz einer Vierstoff-Zerstäuberdüse wird vorzugsweise durch das dem Zentralrohr benachbarte Mantelrohr sowie durch das äußerste Mantelrohr Sprühgas geführt; durch diese Anordnung werden die beiden Lösungen extern gemischt, und gleichzeitig wird ein Mikroklima aufgebaut. Im Hinblick auf die begrenzte Stabilität von Natriumpercarbonat ist es zweckmäßig, die Temperatur der Wirbelschicht während des Einsprühens der beiden Lösungen beziehungsweise der H₂O₂-Lösung und Sodasuspension die Temperatur in der Wirbelschicht im Bereich von 50 bis 70 °C zu halten.

Gemäß einer bevorzugten Ausführungsform wird die Wirbelschicht-Sprühgranulation in einer kontinuierlich betriebenen Wirbelschichtapparatur mit Keimbildung im Reaktor oder Keimeinschleusung und klassierend wirkendem Austrag des Granulats durchgeführt.

Um die Lagerbeständigkeit des Natriumpercarbonats in Gegenwart von Waschmittelbestandteilen, wie insbesondere Zeolithen, zu erhöhen, ist es zweckmäßig das erfindungsgemäß erhältliche granulatförmige Natriumpercarbonat im Anschluß an seine Bildung ein oder mehrschichtig zu umhüllen. Es können hierbei die in der Fachwelt bekannten Verfahren zum Umhüllen von Natriumpercarbonat eingesetzt werden. Bei den Hüllkomponenten handelt es sich überwiegend um Verbindungen, welche selbst Hydrate bilden können, wie Natriumsulfat, Magnesiumsulfat, Natriumcarbonat und Natriumbicarbonat, Borate und Perborate. Zusätzlich wird vielfach Wasserglas als Komponente in einer mehrere Komponenten enthaltenden Umhüllung eingesetzt. Gemäß einer besonders bevorzugten Ausführungsform handelt es sich bei der Umhüllung im wesentlichen um Natriumsulfat und Hydrate desselben.

Ein weiterer Gegenstand der Erfindung richtet sich auf durch das erfindungsgemäße Verfahren erhältliches granulatförmiges Natriumpercarbonat. Die Natriumpercarbonatpartikel sind im wesentlichen kugelförmig und weisen einen schichtförmigen Kornaufbau auf, wie er für eine Wirbelschicht-Sprühgranulation typisch ist. Das Produkt enthält im Korn im wesentlichen gleichmäßig verteilt einen Gehalt an einem Magnesiumsalz in einer Menge im Bereich von 50 bis 2.000 ppm Mg²⁺, vorzugsweise 100 bis 1000 ppm und insbesondere 200 bis 500 ppm Mg²⁺, und optional einen Gehalt an einem oder mehreren Chelatkomplexbildnern, wie sie zuvor offenbart wurden, in einer Menge von 50 bis 2.000 ppm, insbesondere 200 bis 1.000 ppm, jedoch keine Kombination aus einem Magnesiumsalz und einem kondensierten Phosphat. Die Produkte sind ferner dadurch gekennzeichnet, dass sie einen TAM-Wert von gleich oder kleiner 8 µW/g, insbesondere kleiner 7 µW/g, und besonders bevorzugt etwa 4 bis 6 µW/g aufweisen. Die angegebenen TAM-Werte beziehen sich auf eine Messung mittels des Thermal Activity Monitors der Firma Thermometric AB, Spjutvägen 5a, S-175 61 Järfälla; die angegebenen Messwerte sind jene, welche nach 48 h Lagerung bei 40 °C in der Meßküvette gefunden werden. Das Produkt enthält zusätzlich Wasserglas mit einem SiO₂/Na₂O-Modul von 1 bis 3 in einer Menge im Bereich von 0,1 bis 0,5 Gew.-%. Durch eine Kombination von Mg²⁺ und SiO₂ lassen sich auch bei niedriger Einsatzmenge an SiO₂ niedrige TAM-Werte und gleichzeitig kurze Lösezeiten erzielen.

Die Vorteile der Erfindung liegen darin, dass granulatförmiges Natriumpercarbonat mit niedrigem TAM-Wert durch ein bekanntes Wirbelschicht-Sprühgranulationsverfahren durch Einsatz erfindungsgemäßer stabilisierend wirkender Additive und Additivkombinationen erhältlich ist. Durch den niedrigen TAM-Wert ist es möglich, Natriumpercarbonat ohne Sicherheitsrisiko in großen Mengen zu lagern. Durch die erfindungsgemäße Auswahl der stabilisierenden Additive ist es zusätzlich möglich, Produkte bereitzustellen, welche sich rascher auflösen als viele handelsübliche Produkte mit einem Kieselsäuregehalt um 1 Gew.-%. Die nachfolgenden Beispiele verdeutlichen die Erfindung.

### Beispiele

### Allgemeine Arbeitsvorschrift:

In einer Laborapparatur zur Wirbelschicht-Sprühgranulation mit Vorrichtungen zur Staubrückführung und Keimeinschleusung sowie einem klassierend wirkenden Austrag wurden nach dem Fluidisieren von vorgelegtem Natriumpercarbonat mittels einer Dreistoff-Zerstäuberdüse eine 43 gew.-%ige wässrige Wasserstoffperoxidlösung und eine 30 gew.-%ige Sodalösung versprüht. Die Sprühraten betrugen: 3,42 kg/h H₂O₂-Lösung und 9,54 kg/h Sodalösung. Als Magnesiumsalz wurde jeweils Magnesiumsulfat verwendet und der H₂O₂-Lösung zugesetzt. Zur Einstellung des SiO₂-Gehalts im Natriumpercarbonat wurde Wasserglas mit einem Modul im Bereich von 1,8 bis 2 (SiO₂/Na₂O) der zu versprühenden Sodalösung zugesetzt. Der nachfolgenden Tabelle 1 sind die Versuche unter Einsatz unterschiedlicher Additiv-Einsatzmengen, jeweils bezogen auf das herzustellende Natriumpercarbonat, und die resultierenden TAM-Werte, bestimmt nach 48 h bei 40 °C, zu entnehmen. Aus den Versuchen folgt, dass durch den Einsatz von Magnesiumsulfat der SiO₂-Gehalt reduziert werden kann, so dass Produkte erhalten werden, welche einen niedrigen TAM-Wert - um 5 µW/g - aufweisen und gleichzeitig auch eine hohe Lösegeschwindigkeit.

Wie die in Tabelle 2 dargestellten Versuche zeigen, nimmt die Lösezeit des Natriumpercarbonats bei konstant niedrigem SiO₂-Gehalt (hier 0,1 Gew.-%) mit steigender Mg²⁺-Menge überraschenderweise stark ab.

Durch die Kombination von Magnesium mit einem Chelatkomplexbildner werden nicht nur Produkte mit niedrigem TAM-Wert erhalten, sondern gleichzeitig werden betriebliche Störungen durch Ausfällen unlöslicher Magnesiumsalze vermieden.

Bestimmung der Lösezeit: Die Lösezeit gibt die Zeit an, in der 95 % von 2 g der eingesetzten Natriumperboratprobe pro 1 Wasser bei 15 °C gelöst werden. Gemessen wird diese Zeit über die Änderung der elektrischen Leitfähigkeit. Zur Bestimmung wird eine thermostatisierte Meßzelle aus Glas (D: = 90 mm, H₁ = 150 mm) verwendet. Während der Bestimmung wird mit einem 4 Flügel-Rührer mit 340 ± 5 Umdrehungen pro Minute gerührt.

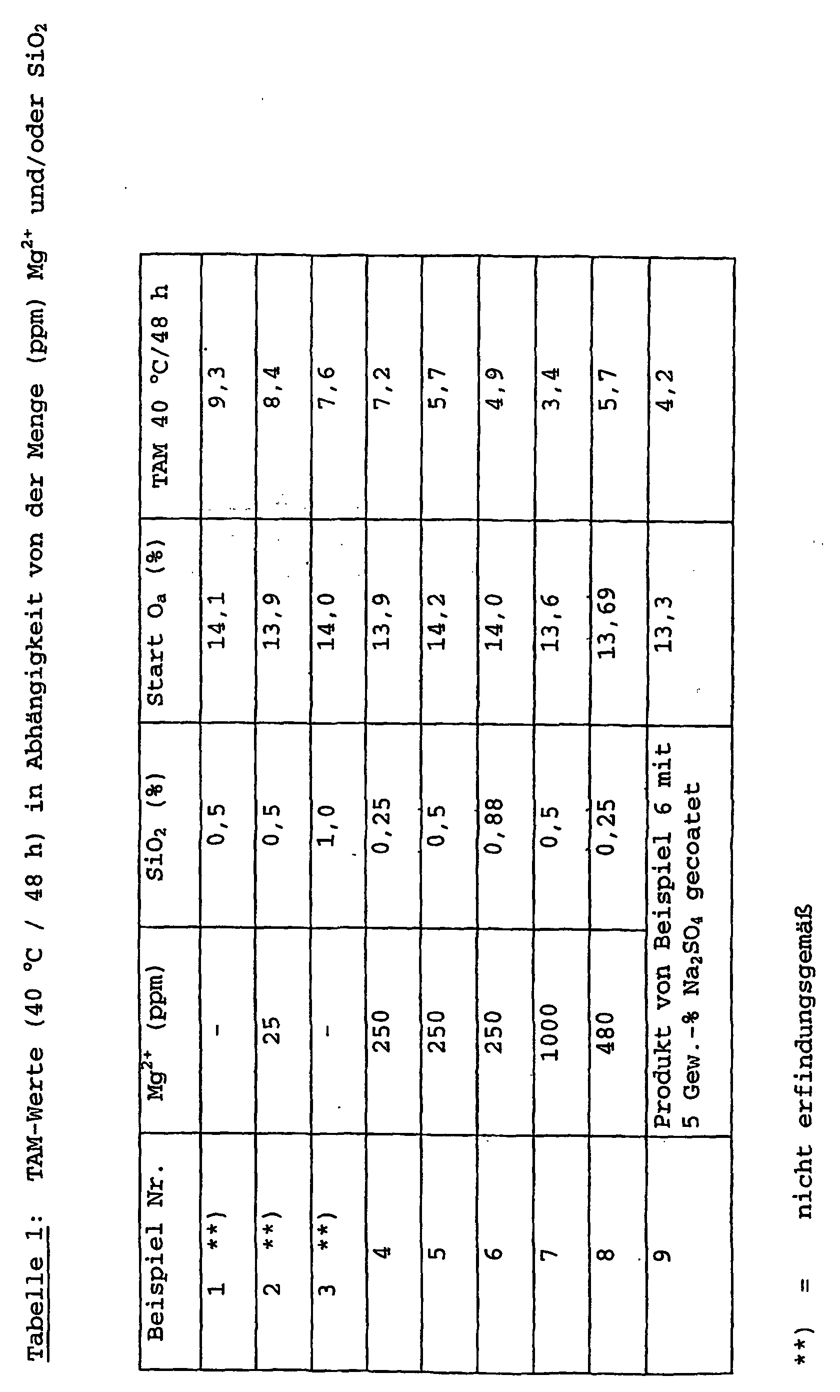

**Tabelle 2:**

| TAM-Wert und Lösezeit in Abhängigkeit von der Einsatzmenge Mg²⁺ bei gegebenem SiO₂-Gehalt | | | | |
|---|---|---|---|---|
| Beispiel Nr. | Mg²⁺ (ppm) | SiO₂ (%) | TAM-Wert | Lösezeit (min/g) |
| 19 | 125 | 0,1 | 10,4 | 1,4 |
| 20 | 250 | 0,1 | 9,3 | 1,1 |
| 21 | 500 | 0,1 | 6,3 | 0,8 |

## Patentansprüche

1. Verfahren zur Herstellung von granulatförmigem Natriumpercarbonat durch Wirbelschicht-Sprühgrannulation, wobei eine wässrige Natriumcarbonatlösung oder -suspension und eine wässrige Wasserstoffperoxidlösung in Anwesenheit mindestens eines stabilitätserhöhenden Additivs in eine Natriumpercarbonatpartikel enthaltende Wirbelschicht eingesprüht und gleichzeitig Wasser bei einer Wirbelschichttemperatur im Bereich von 40 bis 95 °C verdampft wird,
**dadurch gekennzeichnet,**
**dass** man als Additiv eine Magnesiumverbindung in einer Menge von 50 bis 2000 ppm Mg²⁺ und zusätzlich Wasserglas mit einem SiO₂/Na₂O-Modul im Bereich von 1 bis 3 in einer Menge entsprechend 0,1 bis 1 Gew.-% SiO₂ als Stabilisator einsetzt, wobei sich die jeweilige Einsatzmenge auf das herzustellende Natriumpercarbonat bezieht und eine Kombination mit einem kondensierten Phosphat ausgenommen ist.

2. Verfahren nach Anspruch 1,
**dadurch gekennzeichnet,**
**dass** man eine wasserlösliche Mg-Verbindung, insbesondere ein Mg-Sulfat, Mg-Acetat oder Mg-Salz eines Chelatkomplexbildners, in einer Menge von 100 bis 1000 ppm Mg²⁺, insbesondere 200 bis 500 ppm, einsetzt.

3. Verfahren nach Anspruch 1 oder 2,
**dadurch gekennzeichnet,**
**dass** man die Mg-Verbindung der zu versprühenden wässrigen H₂O₂-Lösung zusetzt.

4. Verfahren nach einem der Ansprüche 1 bis 3,
**dadurch gekennzeichnet,**
**dass** man Wasserglas in einer Menge von 0,1 bis 0, 5 Gew.-% SiO₂, bezogen auf Natriumpercarbonat, als Stabilisator einsetzt

5. Verfahren nach einem der Ansprüche 1 bis 4,
**dadurch gekennzeichnet,**
**dass** man zusätzlich einen Chelatkomplexbildner aus der Reihe der Hydroxycarbonsäuren, Phosphonocarbonsäuren, Hydroxyphosphonsäuren sowie Alkalimetall-, Ammonium- oder Magnesiumsalze der genannten Säuren in einer Menge von 50 bis 2000 ppm einsetzt.

6. Verfahren nach Anspruch 5,
**dadurch gekennzeichnet,**
**dass** man einen Komplexbildner aus der Reihe Nitrilotriessigsäure, Iminodiessigsäure, Iminodisuccinat, Weinsäure, Gluconsäure und 1-Hydroxyethan-1,1-diphosphonsäure oder ein Na-, K- oder Mg-Salz der genannten Säuren verwendet und diesen in einer Menge von 100 bis 1000 ppm, insbesondere 200 bis 1000 ppm, bezogen auf das herzustellende Natriumpercarbonat, eingesetzt und der H₂O₂- und/oder Sodalösung oder -suspension zugibt.

7. Verfahren nach einem der Ansprüche 1 bis 6,
**dadurch gekennzeichnet,**
**dass** man eine 30 bis 75 gew.-%ige wässrige H₂O₂-Lösung und eine Sodalösung oder -suspension mit einem Na₂CO₃-Gehalt im Bereich von 20 bis 60 Gew.-%, insbesondere 30 bis 50 Gew.-%, wobei die H₂O₂-Lösung eine Mg-Verbindung und die Sodalösung oder -suspension Wasserglas enthält, unter Verwendung einer Dreistoff- oder Vierstoff-Zerstäuberdüse mit externer Mischung, umfassend ein Zentralrohr und darum angeordnete zwei oder drei Mantelrohre, wobei das Zentralrohr über die Mantelrohre um 2 bis 10 Zentralrohrradien hinausreicht, versprüht.

8. Granulatförmiges Natriumpercarbonat, **gekennzeichnet durch** (i) einen **durch** Wirbelschicht-Sprühgranulation erzeugten [erhältlichen] Kornaufbau, (ii) im Korn im wesentlichen gleichmäßig eine Magnesiumverbindung in einer Menge von 50 bis 2.000 ppm Mg²⁺ und zusätzlich Wasserglas mit einem SiO₂/Na₂O-Modul im Bereich von 1 bis 3 in einer Menge im Bereich von 0,1 bis 0,5 Gew.-% SiO₂, (iii) Abwesenheit eines[m] kondensierten Phosphats, und (iv) einen TAM-Wert von gleich oder kleiner 8 µW/g, insbesondere kleiner 7 µW/g, gemessen nach 48 h bei 40 °C.

9. Granulatförmiges Natriumpercarbonat nach Anspruch 8,
**dadurch gekennzeichnet,**
**dass** es eine ein- oder mehrschichtige stabilisierende Umhüllung aus einem oder mehreren hydratbildenden Salzen aufweist.

## Claims

1. Process for producing granular sodium percarbonate by fluidised-bed spray granulation, wherein an aqueous sodium carbonate solution or sodium carbonate suspension and an aqueous hydrogen peroxide solution, in the presence of at least one stability-enhancing additive, are sprayed into a fluidised bed containing sodium percarbonate particles and at the same time water is evaporated at a fluidised-bed temperature within the range of 40 to 95 °C,
**characterised in that**
a magnesium compound in a quantity of 50 to 2000 ppm Mg²⁺ is used as additive and in addition water-glass having an SiO₂/Na₂O module in the range of 1 to 3, in a quantity corresponding to 0.1 to 1 wt.% SiO₂, is used as stabiliser, the respective quantity used being based on the sodium percarbonate to be produced and a combination with a condensed phosphate being excluded.

2. Process according to claim 1,
**characterised in that**
a water-soluble Mg compound, in particular an Mg sulfate, Mg acetate or Mg salt of a chelate complexing agent, is used in a quantity of 100 to 1000 ppm Mg²⁺, in particular 200 to 500 ppm.

3. Process according to claim 1 or 2,
**characterised in that**
the Mg compound is added to the aqueous H₂O₂ solution to be sprayed.

4. Process according to one of claims 1 to 3,
**characterised in that**
water-glass in a quantity of 0.1 to 0.5 wt.% SiO₂, based on sodium percarbonate, is used as stabiliser.

5. Process according to one of claims 1 to 4,
**characterised in that**,
in addition a chelate complexing agent selected from among the hydroxycarboxylic acids, phosphonocarboxylic acids, hydroxyphosphonic acids as well as alkali metal salts, ammonium salts or magnesium salts of the above-mentioned acids is used in a quantity of 50 to 2000 ppm

6. Process according to claim 5,
**characterised in that**,
a complexing agent selected from among nitrilotriacetic acid, iminodiacetic acid, iminodisuccinate, tartaric acid, gluconic acid and 1-hydroxyethane-1,1-diphosphonic acid or an Na, K or Mg salt of the above-mentioned acids is used and this is introduced in a quantity of 100 to 1000 ppm, in particular 200 to 1000 ppm, based on the sodium percarbonate to be produced, and is added to the H₂O₂ solution and/or soda solution or soda suspension.

7. Process according to one of claims 1 to 6,
**characterised in that**
a 30 to 75 wt.% aqueous H₂O₂ solution and a soda solution or soda suspension having an Na₂CO₃ content within the range of 20 to 60 wt.%, in particular 30 to 50 wt.%, the H₂O₂ solution containing an Mg compound and the soda solution or soda suspension containing water-glass, are sprayed using a three-component or four-component atomising nozzle with external mixing and comprising a central pipe and two or three jacketed pipes disposed around it, with the central pipe extending beyond the jacketed pipes by 2 to 10 times the radius of the central pipe.

8. Granular sodium percarbonate, **characterised by** (i) a grain structure produced [obtainable] by fluidised-bed spray granulation, (ii) substantially evenly in the grain, a magnesium compound in a quantity of 50 to 2000 ppm Mg²⁺ and in addition water-glass having an SiO₂/Na₂O module in the range of 1 to 3, in a quantity within the range of 0.1 to 0.5 wt.% SiO₂, (iii) absence of a condensed phosphate, and (iv) a TAM value of equal to or less than 8 µW/g, in particular less than 7 µW/g, measured after 48 h at 40 °C.

9. Granular sodium percarbonate according to claim 8,
**characterised in that**
it has a single-layer or multilayer stabilising coating consisting of one or more hydrate-forming salts.

## Revendications

1. Procédé de fabrication de percarbonate de sodium sous forme de granulat par granulation avec pulvérisation en lit fluidisé, selon lequel on pulvérise une solution ou suspension aqueuse de carbonate de sodium et une solution aqueuse de peroxyde d'hydrogène, en présence d'au moins un additif élevant la stabilité, dans un lit fluidisé contenant des particules de percarbonate de sodium, et simultanément on vaporise de l'eau à une température du lit fluidisé comprise dans un intervalle allant de 40 à 95°C,
**caractérisé en ce que**
comme additif on utilise un composé de magnésium en quantité de 50 à 2000 ppm de Mg²⁺ et en outre un verre soluble ayant un module SiO₂/Na₂O compris dans un intervalle allant de 1 à 3 en quantité correspondant à 0,1 à 1 % en poids de SiO₂ comme stabilisateur, la quantité correspondante utilisée à chaque fois se rapportant au percarbonate de sodium à fabriquer, et en excluant une combinaison avec un phosphate condensé.

2. Procédé selon la revendication 1,
**caractérisé en ce qu'**
on utilise un composé de Mg soluble dans l'eau, en particulier un sulfate de Mg, un acétate de Mg ou un sel de Mg d'un formateur de complexe de chélate, en quantité allant de 100 à 1000 ppm de Mg²⁺, en particulier de 200 à 500 ppm.

3. Procédé selon la revendication 1 ou 2,
**caractérisé en ce qu'**
on ajoute le composé de Mg à la solution aqueuse d'H₂O₂ à pulvériser.

4. Procédé selon l'une des revendications 1 à 3,
**caractérisé en ce que**
comme stabilisateur on utilise un verre soluble en quantité de 0,1 à 0,5 % en poids de SiO₂, par rapport au percarbonate de sodium.

5. Procédé selon l'une des revendications 1 à 4,
**caractérisé en ce qu'**
on utilise en outre un formateur de complexe de chélate de la série des acides hydroxycarboxyliques, des acides phosphonocarboxyliques, des acides hydroxyphosphoniques ainsi que des sels de métaux alcalins, d'ammonium ou de magnésium des acides mentionnés en une quantité de 50 à 2000 ppm.

6. Procédé selon la revendication 5,
**caractérisé en ce qu'**
on utilise un formateur de complexe de la série de l'acide nitrilotriacétique, de l'acide iminodiacétique, de l'iminodisuccinate, de l'acide tartrique, de l'acide gluconique et de l'acide 1-hydroxyéthane-1,1-diphosphonique ou d'un sel de sodium, de potassium ou de magnésium des acides mentionnés, et
on l'emploie en quantité de 100 à 1000 ppm, en particulier de 200 à 1000 ppm, par rapport au percarbonate de sodium à produire, et on l'ajoute à la solution ou suspension d'H₂O₂ et/ou de carbonate de sodium.

7. Procédé selon l'une des revendications 1 à 6,
**caractérisé en ce qu'**
on pulvérise une solution aqueuse d'H₂O₂ à 30 à 75 % en poids et une solution ou suspension de carbonate de sodium présentant une teneur en Na₂CO₃ comprise dans un intervalle allant de 20 à 60 % en poids, en particulier de 30 à 50 % en poids, la solution d'H₂O₂ contenant un composé de Mg et la solution ou suspension de carbonate de sodium contenant un verre soluble, en utilisant une buse de pulvérisation à trois ou quatre produits avec mélange externe, comprenant un tube central et deux ou trois tubes enveloppants disposés autour de lui, et dont le tube central dépasse les tubes enveloppants de 2 à 10 rayons de tube central.

8. Percarbonate de sodium sous forme de granulat,
**caractérisé par**
(i) une structure granulaire produite [que l'on peut obtenir] par une granulation avec pulvérisation en lit fluidisé,
(ii) (ii) dans le noyau, réparti de manière essentiellement régulière, un composé de magnésium en quantité de 50 à 2000 ppm de Mg²⁺ et en outre un verre soluble présentant un module SiO₂/Na₂O situé dans un intervalle allant de 1 à 3 en quantité située dans un intervalle allant de 0,1 à 0, 5 % en poids de SiO₂,
(iii) l'absence d'un phosphate condensé, et
(iv) une valeur de TAM égale ou inférieure à 8 µW/g, en particulier inférieure à 7 µW/g, mesurée au bout de 48 h à 40°C.

9. Percarbonate de sodium sous forme de granulat selon la revendication 8,
**caractérisé en ce qu'**
il présente un enrobage stabilisant à une ou plusieurs couches et constitué d'un ou de plusieurs sels formateurs d'hydrates.
